# EUROPÄISCHE PATENTSCHRIFT

(11) **EP 2 356 026 B1**
(45) Veröffentlichungstag und Bekanntmachung des Hinweises auf die Patenterteilung: **18.02.2015**
(21) Anmeldenummer: 09793470.7
(22) Anmeldetag: 11.12.2009
(51) Int. Cl.: B64D 13/08, B64D 41/00

(54) **NOTENERGIESYSTEM FÜR EIN LUFTFAHRZEUG**
EMERGENCY POWER SYSTEM FOR AN AIRCRAFT
SYSTÈME D'ÉNERGIE DE SECOURS POUR AÉRONEF

(30) Priorität: 12.12.2008 DE 102008062038; 22.10.2009 DE 102009050309
(43) Veröffentlichungstag der Anmeldung: 17.08.2011
(73) Patentinhaber: Liebherr-Aerospace Lindenberg GmbH, 88161 Lindenberg/Allgäu (DE)
(72) Erfinder: BRUGGER, Ralf, 88239 Wangen i.A. (DE); FRICK, Jörn, 88289 Waldburg (DE); HERZOG, Jacques, 88174 Simmerberg (DE); METZLER, Dirk, 88179 Oberreute (DE)
(74) Vertreter: Herrmann, Uwe
(86) Internationale Anmeldenummer: PCT/EP2009/008880
(87) Internationale Veröffentlichungsnummer: WO 2010/066440

(56) Entgegenhaltungen:
- EP-A2- 1 057 668
- EP-A2- 1 439 082
- WO-A1-2008/014912
- DE-A1-102007 017 820
- US-A1- 2007 158 500

## Beschreibung

Die vorliegende Erfindung betrifft ein Verfahren zum Betreiben eines Notenergiesystems eines Flugzeuges gemäß dem Oberbegriff des Anspruchs 1. Notenergiesysteme, die im Notfall elektrische Energie durch eine Brennstoffzelleneinheit zur Verfügung stellen können, sind aus dem Stand der Technik bekannt. Beim Betrieb der Brennstoffzelleneinheit entsteht Abwärme, die abgeführt werden muss, um eine ordnungsgemäße Funktion der Brennstoffzelleneinheit zu gewährleisten. Dazu kann ein Kühlkreislauf vorgesehen sein, in dem ein Kühlmittel zirkuliert, das die Abwärme der Brennstoffzelleneinheit aufnimmt und über einen Wärmeübertrager abgibt.

Ein derartiges Notenergiesystem ist aus der DE 10 2007 017 820 A1 bekannt. Hier sollen im Notbetrieb ein oder mehrere elektrische Verbraucher unmittelbar oder mittelbar von einer Brennstoffzelle mit Energie versorgt werden.

Aus der US 2007/0158500 A1 ist ein Luftfahrzeug mit einem Brennstoffzellensystem bekannt. Die technische Lehre dieser Druckschrift schlägt vor, die produzierte Abwärme des Brennstoffzellensystems für die Aufheizung der Kabinenluft zu verwenden.

Der vorliegenden Erfindung liegt die Aufgabe zugrunde, eine effiziente Abfuhr von Abwärme des Notenergiesystems zu gewährleisten.

Diese Aufgabe wird durch ein Verfahren mit den Merkmalen des Anspruchs 1 gelöst. Dabei ist vorgesehen, das Brennstoffzellensystem bzw. die Brennstoffzelle selbst zu kühlen, das heißt die Brennstoffzelle bzw. das Brennstoffzellensystem gibt dann die Wärme direkt in das Luftverteilungssystem ab. Eine derartige Brennstoffzelle bzw. ein solches Brennstoffzellensystem kann zusätzlich über einen oben erwähnten Kühlkreislauf, insbesondere über einen wasserbetriebenen Kühlkreislauf gekühlt werden. Bevorzugt ist es jedoch, dass der Kühlkreislauf für die Brennstoffzelle und damit auch der Wärmeübertrager entfallen, wodurch sich eine entsprechende Vereinfachung des Systems ergibt.

Bei der Variante der luftgekühlten Brennstoffzelle kann auf die Einspritzung von Produktwasser verzichtet werden, da vorzugsweise das Produktwasser wie die Abwärme an die Prozessluft abgegeben wird.

Die Flugzeug-Kabine dient erfindungsgemäß gleichsam als Wärmepuffer für die Abwärme des Notenergiesystems bzw. dient als interne Kühlung.

Denkbar ist es, eine Anlage zur Verdampfung von Brennstoffzellen-Produktwasser und/oder von Wasser vorzusehen, das bevorratet wurde, über welche die Zuluft und/oder die Abluft des Wärmeübertragers abgekühlt wird. Auf diese Weise lässt sich eine Effizienzsteigerung der Kühlung erreichen.

Um den Einbau des Notenergiesystems zu vereinfachen, ist es von Vorteil, wenn die Komponenten des Notenergiesystems räumlich eng beisammen angeordnet sind. Vorteilhafterweise ist/sind wenigstens eine, vorzugsweise mehrere und besonders bevorzugt alle Komponenten des Notenergiesystems im bedruckten Bereich des Luftfahrzeuges angeordnet. Weitere vorteilhafte Ausgestaltungen des Verfahrens ergeben sich aus den Unteransprüchen 2 bis 19. So ist es beispielsweise denkbar, die Brennstoffzellentemperaturregelung über die Leistungsregelung des Rezirkulationsgebläses (im Folgenden "RFAN") oder eines Gebläses (im Folgenden "FCEPS FAN"), das eigens dem Notenergiesystem zugeordnet ist, durchzuführen. Bei nicht stufenlos regelbaren Gebläsen oder bei Gebläsen, die den aerodynamischen Anforderungen des Brennstoffzellen-Notenergiesystems nicht genügen, kann die Temperatur über eine Ein/Aus-Steuerung des Gebläses geregelt werden. Das RFAN des Luftverteilungssystems ist in der Regel mit einem eigenen Controller (Smart) ausgerüstet, der z. B. über eine BUS-Kombination (CAN) im Betriebsfall des FCEPS, d.h. im Notbetrieb, von dem Brennstoffzellen-Controller mit einem alternativen Regelungssignal betrieben werden kann.

Das oder die RFANs müssen im Notfall mit Leistung versorgt werden können. Dies kann indirekt erreicht werden, indem sie flugzeugseitig an das Notstromnetz angebunden sind, das im Notfall von der Brennstoffzelleneinheit (im Folgenden "FCEPS") mit Strom versorgt wird. Alternativ dazu ist es auch denkbar, eine direkte elektrische Versorgung des oder der RFANs in dem FCEPS über eine entsprechende Schalteinheit (Relais etc.) zu realisieren. Synonym für den Begriff "Brennstoffzelleneinheit" wird im folgenden auch der Begriff "Brennstoffzellensystem" verwendet.

Grundsätzlich ist es denkbar, dass die Luft für den Wärmeübertrager (im Folgenden "HX") bzw. für das Brennstoffzellensystem aus der Umgebung des Systems oder auch aus einem beliebigen luftführenden Rohr/Kanal angesaugt bzw. eingeführt wird.

Sind mehrere Rezirkulationsgebläse vorgesehen, ist es denkbar, die wenigstens eine Abluftleitung und/oder die wenigstens eine Zuluftleitung dieser mehreren bzw. weiteren Rezirkulationsgebläse im Notbetrieb, das heißt optional mit wenigstens einer Abluftleitung und/oder mit wenigstens einer Zuluftleitung des Wärmeübertragers HX und/oder des Brennstoffzellensystems FCEPS mittels wenigstens einer Verbindungsleitung ("cross duct CD") zu verbinden. Diese cross ducts können im Bedarfsfall (Notbetrieb) durch Bypassventile BPV geöffnet werden und ansonsten durch dieses Ventil verschlossen werden.

Weiterhin kann wenigstens ein Bypassventil BPV vorgesehen sein, das derart angeordnet ist, dass es in einer ersten Stellung des Ventils zu einer Durchströmung einer Leitung des Luftverteilungssystems kommt, insbesondere zu einer Durchströmung der Rezirkulationsleitung des Luftverteilungssystems, ohne dass der Wärmeübertrager HX und/oder das Brennstoffzellensystem FCEPS durchströmt wird. In einer zweiten Stellung des Ventils kann vorgesehen sein, dass der Wärmeübertrager HX und/oder das Brennstoffzellensystem FCEPS durchströmt wird, wie dies im Notbetrieb der Fall ist. Je nach Anordnung des Ventils kann vorgesehen sein, dass im Normalbetrieb ein Rezirkulationsfilter RF durchströmt wird, im Notbetrieb jedoch durch das Rezirkulationsbypassventil auf Bypass geschaltet wird und Luft direkt über den HX und/oder das Brennstoffzellensystem FCEPS geführt wird.

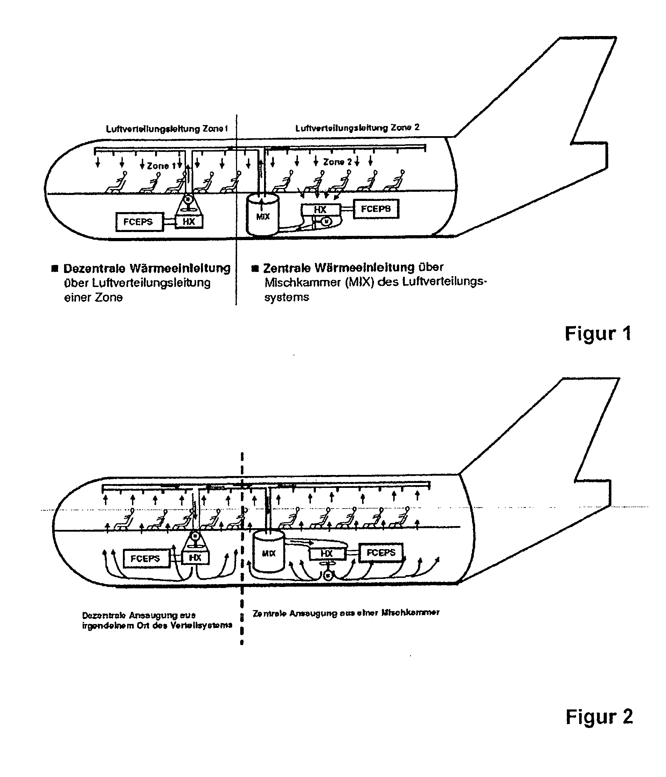

Die nachfolgenden Ausführungen und Ausführungsbeispiele bzw. Architekturen sind grundsätzlich im sogenannten Druckbetrieb als auch im Saugbetrieb denkbar und von der Erfindung mitumfasst. Der in den Figuren 1 bis 15 dargestellte Wärmeübertrager HX kann auch durch eine Brennstoffzelle bzw. durch ein Brennstoffzellensystem FCEPS ersetzt werden. In diesem Zusammenhang wird darauf hingewiesen, dass der Begriff der Brennstoffzelleneinheit oder des Brennstoffzellensystems FCEPS die Brennstoffzelle selbst betreffen kann sowie auch ein System oder eine Einheit, dessen/deren Bestandteil die Brennstoffzelle bildet.

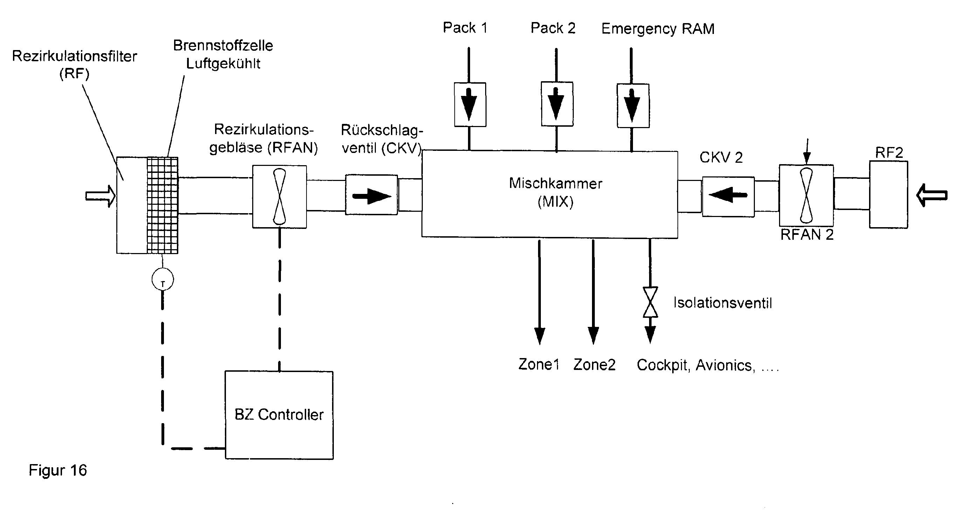

Wird der Wärmeübertrager HX durch die Brennstoffzelle bzw. durch das Brennstoffzellensystem ersetzt, gibt letztere Wärme direkt in das Luftverteilungssystem ab. Eine Architektur dieser Anordnung ist in Figur 16 dargestellt. Wie ausgeführt, ist die Erfindung jedoch nicht auf diese Architektur beschränkt, sondern umfasst auch alle Ausführungsformen, in denen der Wärmeübertrager durch eine vorzugsweise luftgekühlte Brennstoffzelle bzw. ein vorzugsweise luftgekühltes Brennstoffzellensystem ersetzt ist.

Weitere Einzelheiten und Vorteile der Erfindung werden anhand eines in den Zeichnungen dargestellten Ausführungsbeispiels näher erläutert. Es zeigen:
- Figur 1:: eine schematische Darstellung des Betriebs des Notenergiesystems im Druckbetrieb,
- Figur 2:: eine schematische Darstellung des Betriebs des Notenergiesystems im Saugbetrieb,
- Figur 3:: eine schematische Darstellung einer Architektur mit zentraler Wärmeeinleitung mit RFANs und freier Ansaugung,
- Figur 4:: eine schematische Darstellung einer Architektur mit zentraler Wärmeeinleitung mit RFANs und Ansaugung aus einem Luftkanal,
- Figur 5:: eine schematische Darstellung einer Architektur mit zentraler Wärmeeinleitung mit RFANs und Anordnung des HX stromabwärts des RFAN,
- Figur 6:: eine schematische Darstellung einer Architektur mit zentraler Wärmeeinleitung mit dem HX zugeordneten FCEPS FAN und freier Ansaugung,
- Figur 7:: eine schematische Darstellung einer Architektur mit zentraler Wärmeeinleitung mit dem HX zugeordneten FCEPS FAN und Ansaugung aus einem Rohr/Kanal,
- Figur 8:: eine schematische Darstellung einer Architektur mit dezentraler Wärmeinleitung in ein Luftverteilungssystem einer Flugzeugzone und freier Ansaugung,
- Figur 9:: eine schematische Darstellung einer Architektur mit dezentraler Wärmeeinleitung in eine Luftverteilungsleitung einer Flugzeugzone mit Ansaugung aus einem Rohr/Kanal,
- Figur 10:: eine schematische Darstellung einer Architektur mit dezentraler Wärmeeinleitung mit RFANs und Anordnung des HX in einem Zonenabgang,
- Figur 11:: eine schematische Darstellung einer Architektur mit dezentraler Wärmeeinleitung mit RFANs und Anordnung des HX parallel zum Zonenabgang,
- Figur 12:: eine schematische Darstellung einer Architektur mit dezentraler Wärmeeinleitung mit RFANs und Anordnung des HX zwischen dem Rezirkulationsgebläseausgang und einem Zonenabgang,
- Figur 13:: eine schematische Darstellung einer Architektur mit dezentraler Wärmeeinleitung mit RFANs und Anordnung des HX zwischen einer Position stromaufwärts des RFAN und einem Zonenabgang,
- Figur 14:: eine schematische Darstellung einer Architektur mit zentraler Wärmeeinleitung mit RFANs und Anordnung des HX unmittelbar im Ansaugstrang des RFAN stromabwärts des Rezirkulationsfilters RF,
- Figur 15:: eine schematische Darstellung einer Architektur mit zentraler Wärmeeinleitung mit RFANs und Anordnung des HX unmittelbar im Ansaugstrang des RFAN stromaufwärts des Rezirkulationsfilters RF und
- Figur 16:: eine schematische Darstellung einer Architektur mit luftgekühlter Brennstoffzelle.

Figur 1 zeigt in schematischer Darstellung zwei Zonen (Zone 1, Zone2) einer Flugzeug-Kabine, die über Luftverteilungsleitungen (Luftverteilungsleitung Zone1; Luftverteilungsleitung Zone 2) mit Zuluft versorgt werden. In dem bedruckten Raum des Flugzeuges ist ein Notenergiesystem angeordnet, das eine Brennstoffzellen-Einheit FCEPS und einen Wärmeübertrager HX umfasst. FCEPS und HX sind über eine oder mehrere Kühlmittelleitungen miteinander verbunden. Das durch diese Kühlmittelleitung zirkulierende Kühlmittel nimmt Wärme von der FCEPS auf. Diese Wärme wird in dem HX abgeben. Figur 1 zeigt bezüglich Zone 2 eine zentrale Wärmeeinleitung über die Mischkammer MIX eines Flugzeugluftverteilungssystems. Dem MIX wird über ein Gebläse die erwärmte Abluft des HX zugeführt. Von dort gelangt die Luft über eine oder mehrere Luftverteilungsleitungen in Zone 2. Alternativ kann auch eine dezentrale Wärmeeinleitung über die Luftverteilungsleitung einer Flugzeugzone vorgesehen sein, wie dies bezüglich Zone 1 dargestellt ist. In diesem Fall wird die Abluft des HX mittels eines Gebläses nicht in eine Mischkammer, sondern direkt in eine Luftverteilungsleitung geführt. In beiden Fällen wird die Abwärme des FCEPS bzw. des HX über ein Gebläse in das Flugzeugluftverteilungssystem eingebracht (Druckbetrieb).

Figur 2 zeigt eine Ausführung im Saugbetrieb. Dort wird zur Kühlung des HX Luft zentral aus der MIX oder dezentral aus irgendeinem Ort des Flugzeugluftverteilungssystem verwendet. Bei der zentralen Ansaugung aus einer Mischkammer (Figur 2, rechte Bildhälfte) wird Luft aus dem MIX und dadurch aus der Kabine (die im Rahmen der vorliegenden Erfindung auch das Cockpit, Avionics etc. umfasst) angesaugt. Bei der Anordnung gemäß Figur 2, linke Bildhälfte wird die Luft nicht aus einer MIX, sondern aus einer Luftverteilungsleitung angesaugt und sodann dem HX zugeführt. Es ist darauf zu achten, dass keine Kurzschlussströmung zwischen den Rezirkulationseinlässen und der HX-Abluftseite entsteht. Ein Vorteil des Saugbetriebes liegt darin, dass die Passagiere mit deutlich kühlerer Luft angeströmt werden, als beim Druckbetrieb. Dies ist darauf zurückzuführen, dass beim Saugbetrieb Wärme an den Underfloor-Bereich abgegeben wird, bevor die Luft in die Kabine eingeleitet wird.

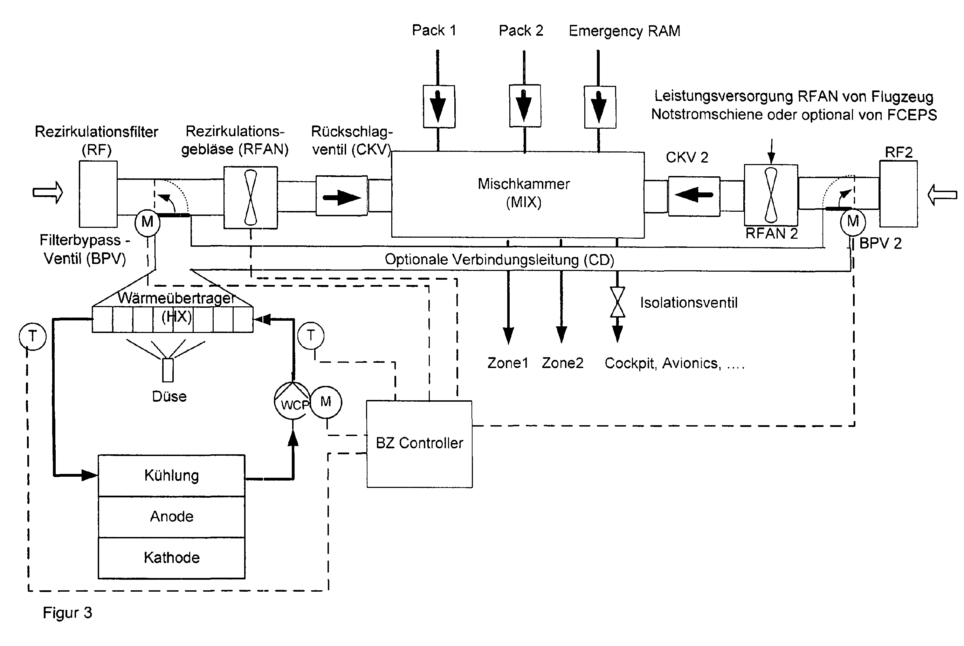

Von der Erfindung sind beide Varianten (zentral über MIX oder dezentral, d.h. nicht über MIX) sowohl im Druckbetrieb als auch im Saugbetrieb umfaßt. Die Figuren 3 bis 13 zeigen Architekturen, die sowohl im Druckbetrieb als auch im Saugbetrieb realisierbar sind, wobei von der Erfindung beide Betriebsarten umfaßt sind.

Figur 3 zeigt eine Architektur mit zentraler Wärmeeinleitung in MIX, bei der kein eigens für den HX vorgesehenes Gebläse vorgesehen ist. Zur Durchströmung des HX dienen ein oder mehrere der ohnehin vorhandenen Rezirkulationsgebläse RFAN, RFAN 2, die zu dem Luftverteilungssystem des Flugzeugs gehören. Mittels des RFAN wird im Notbetrieb Luft über den HX gesogen. Die Position, in der der Abluftkanal des HX in die in die MIX führende Leitung bzw. Rezirkulationsleitung mündet, befindet sich zwischen einem stromaufwärtigen Rezirkulationsfilter (im Folgenden "RF") und dem RFAN. Der RF hat die Funktion, die umgewälzte Luft aus der Kabine zu reinigen. Diese Reinigungsfunktion ist für den kurzzeitigen Einsatz eines FCEPS im Notfall nicht mehr notwendig und reduziert im übrigen die erforderliche Gebläseleistung, die durch den filterabhängigen Druckverlust bedingt ist. Das Rezirkulationsfilterbypass-Ventil (im Folgenden "BPV") ist derart angeordnet und ausgeführt, dass es im Normalbetrieb eine Durchströmung des RF und des RFAN ermöglicht, wobei die Luft sodann durch das Rückschlagventil (CKV) in die MIX geführt wird. Im Notbetrieb wird das BPV umgeschaltet, so dass die Luft mittels des RFAN nicht durch den RF, sondern direkt über den Abluftkanal des HX abgesogen wird. Sind mehrere RFAN, RFAN 2 vorhanden, kann über eine zusätzliche Verbindungsleitung (Crossduct (CD)) eine Verbindung zwischen der Abluftseite des HX und der Zu- oder Abluftleitung des weiteren RFAN 2 Kühlluft für den HX zugeführt werden. Auch auf dieser Seite kann ein BPV2 angeordnet sein, um auch dort das Ansaugen über den zweiten RF2 im Notbetrieb zu verhindern. Dies erhöht die FCEPS-Systemverfügbarkeit und schafft eine Redundanz, was die Ausfallwahrscheinlichkeit des FCEPS-Systems positiv beeinflußt.

Wie aus Figur 3 weiter ersichtlich, können ein oder mehrere Isolationsventile vorgesehen sein, die im Notbetrieb die Zuströmung von Abwärme in kritische Zonen, wie beispielsweise Cockpit oder Flugzeug-Avionikbereich verhindern. Im Normalbetrieb ist das Isolationsventil offen und im Notbetrieb geschlossen. Wie aus Fig. 3 weiter ersichtlich erfolgt eine "freie Ansaugung" des HX, d.h. die Luft wird nicht durch eine Leitung oder dergleichen, sondern aus der Umgebung zugeführt.

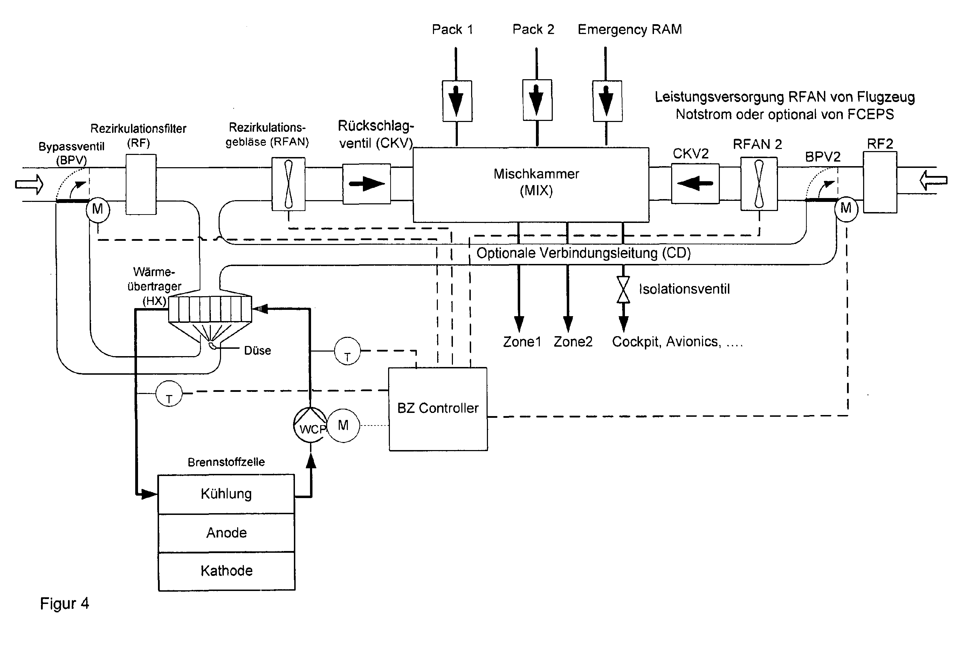

Figur 4 zeigt eine Anordnung mit zentraler Wärmeeinleitung in den MIX, bei der die Zuluft des HX aus einem Luftkanal bereitgestellt wird. Die Zuluftleitung des HX zweigt stromaufwärts oder stromabwärts des RF und stromaufwärts des RFAN von der in die MIX führenden Leitung bzw. Rezirkulationsleitung ab, in der die Luftströmung durch den RFAN bewirkt wird. Im Notbetrieb wird das BPV geschlossen, was zur Folge hat, dass der RF nicht mehr durchströmt wird, sondern die Luft parallel und im Bypass zum RF durch den HX gesogen wird. Durch eine oder mehrere optionale Verbindungsleitungen (im Folgenden "CD") kann eine Umschaltung auf weitere RFAN2 realisiert werden. In diesem Fall wird die Luftauslassseite des HX mit dem Eingang oder Ausgang des oder der weiteren RFAN2 verbunden, wobei auch hier ein BPV2 vorgesehen ist, das die CD sperrt oder im Notbetrieb freigibt.

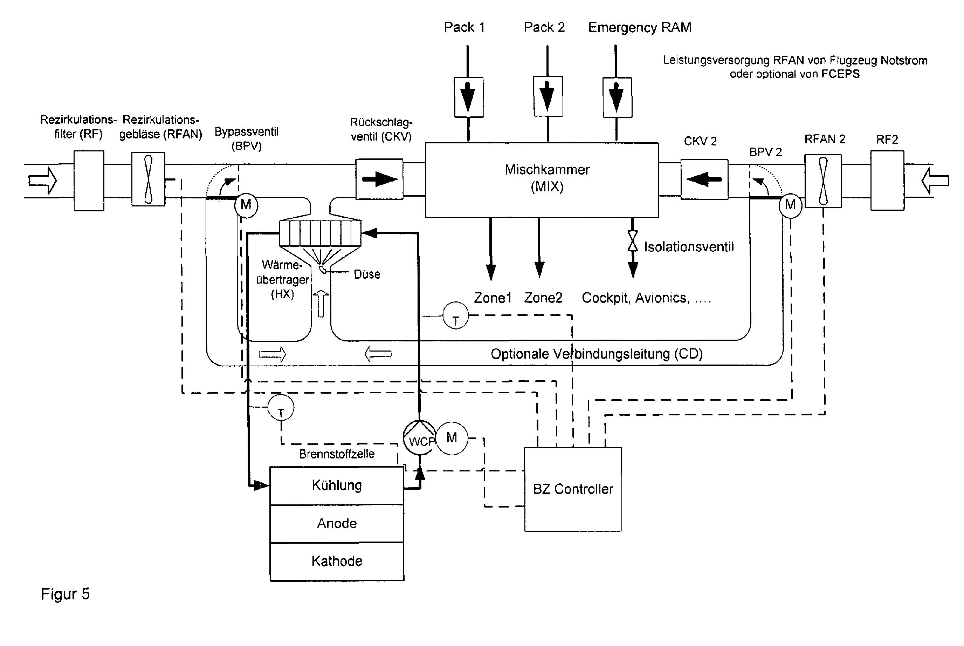

Figur 5 zeigt eine Architektur mit zentraler Wärmeeinleitung in den MIX, bei der sowohl die Zuluftleitung als auch die Abluftleitung des HX stromabwärts des RF und RFAN in die Leitung bzw. Rezirkulationsleitung mündet, die in die MIX führt. Der HX erhält die angesaugte Luft über einen beliebigen luftführenden Kanal/Rohr/Leitung vom RFAN. Die Verbindung zwischen der Ansaugstelle und dem nachfolgenden Rohrsystem wird auch hier über ein BPV verschlossen, wodurch die Luft im Notbetrieb über den HX geblasen wird. Die HX-Abluft kann direkt nach dem BPV oder alternativ auch nach einem Rückschlagventil (CKV) erfolgen. Auch hier kann zur Erhöhung der Verfügbarkeit bei Vorhandensein von einem oder mehreren weiteren RFANs durch eine oder mehrere optionale CDs eine Umschaltung auf weitere RFANs realisiert werden. Diese Verbindungsleitung verbindet die Lufteinlassseite des HX mit dem Ausgang des/der weiteren RFANs (RFAN2). Um die Luftströmung in die CD zu bewirken, kann ein weiteres BPV2 notwendig sein. Dieses wird geschlossen, wenn Luft mittels des RFAN2 zu dem HX geleitet wird.

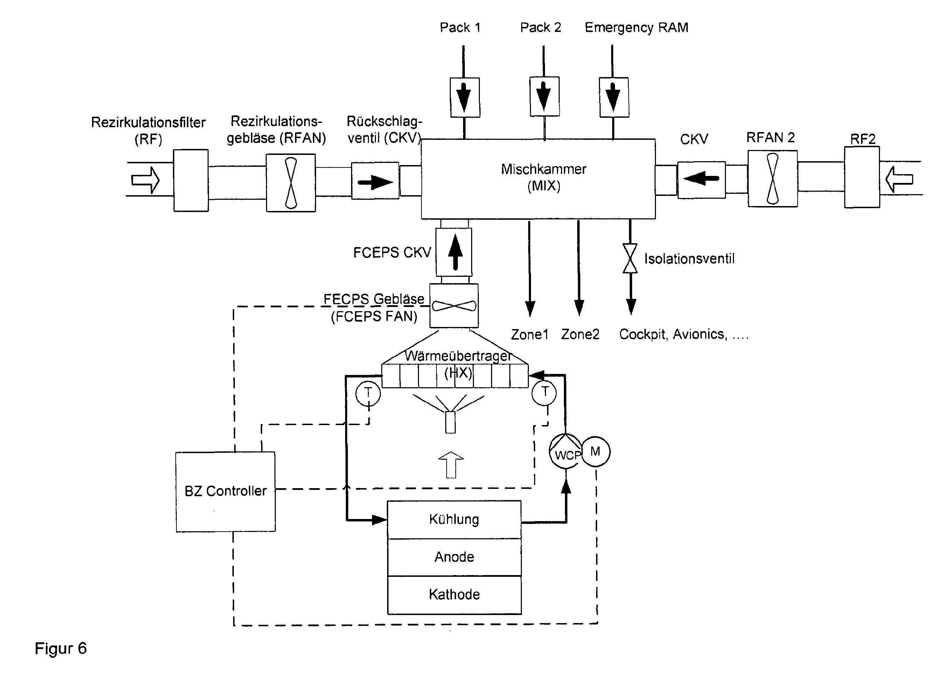

Figur 6 zeigt eine Anordnung mit zentraler Wärmeeinleitung, bei dem die Abwärme des HX über ein eigenes Gebläse (FCEPS FAN) des HX bzw. des FCEPS und ein zugehöriges nachgeschaltetes Ventil (FCEPS CKV) zentral in die MIX eingeleitet wird. Bei dem FCEPS CKV kann es sich um ein passives Rückschlagventil oder um ein elektrisches Auf/Zuventil handeln. In dem in Figur 6 dargestellten Fall erfolgt die Luftzufuhr für den HX frei aus der Umgebung des HX. Das FCPES FAN kann wahlweise vor und/oder nach dem HX vorgesehen sein. Ein zusätzliches Bypass-Ventil ist im Gegensatz zu den Architekturen gemäß der Figuren 3 bis 5 nicht erforderlich.

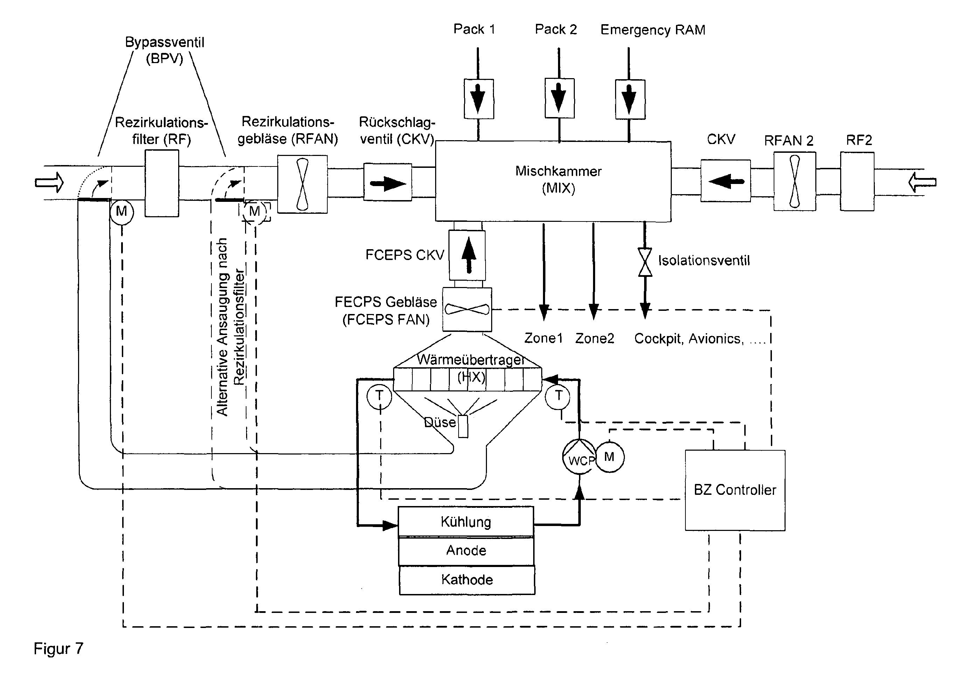

Figur 7 zeigt eine Anordnung mit zentraler Wärmeeinleitung in die MIX, bei der die Abluftseite des HX der Anordnung gemäß Figur 6 entspricht. Jedoch wird die Zuluft des HX aus einem beliebigen luftführenden Rohr/Kanal, das vor dem RFAN und stromabwärts oder stromaufwärts des RF von der in die MIX führenden Leitung bzw. Rezirkulationsleitung abzweigt, zugeführt. Wird vor dem RF angesaugt, ergibt sich der Vorteil eines geringeren Druckverlustes. Wie bereits oben beschrieben sind ein oder mehrere BPV(s) vorgesehen, die im Normalbetrieb die Durchströmung der Leitung bzw. Rezirkulationsleitung freigibt, die in die MIX führt und in der der RF sowie der RFAN angeordnet sind. Im Notbetrieb wird diese Leitung geschlossen und die Luft über die abzweigende Leitung zum Einlass des HX geführt.

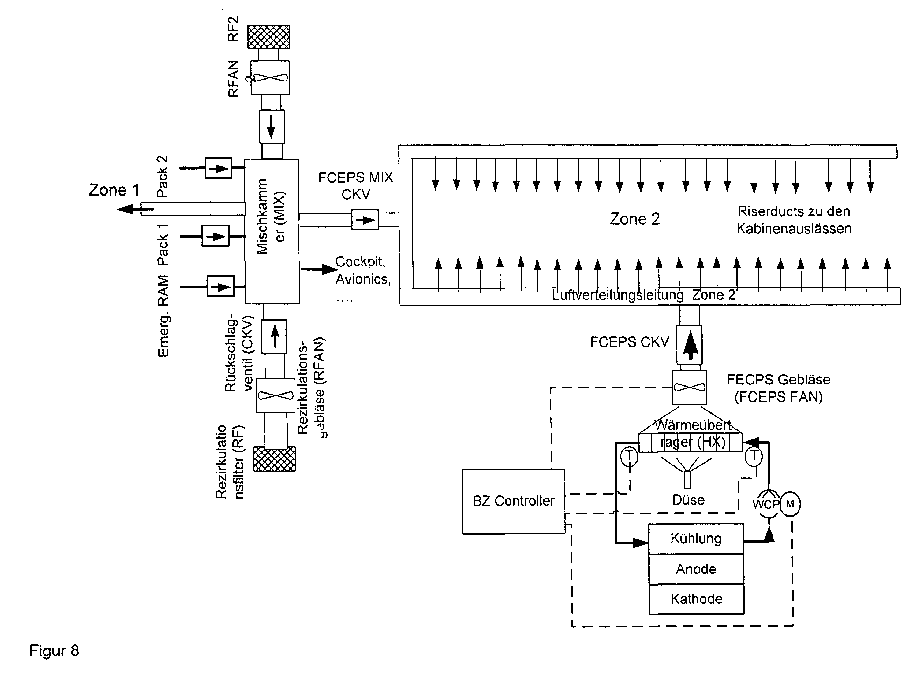

Die Figuren 8 bis 13 zeigen Anordnungen mit dezentraler Wärmeeinleitung, vorzugsweise direkt (jedenfalls nicht über eine MIX) in eine Luftverteilungsleitung einer Zone. Hierdurch kann das System sehr flexibel im Flugzeugrumpf angeordnet werden und außerhalb der kritischen "Rotor burst zone", die sich zwischen den Triebwerken befindet, beispielsweise im hinteren Teil des Flugzeuges installiert werden.

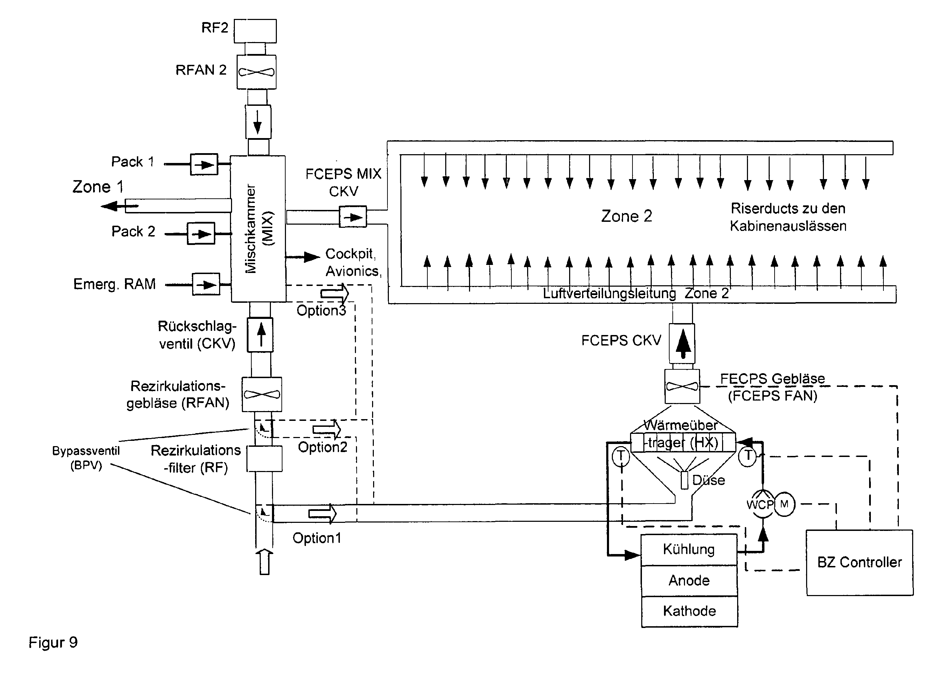

Figur 8 zeigt wie auch Figur 6, dass die Luft über den HX mittels eines eigenen Gebläses (FCEPS FAN) und einem nachfolgend angeordneten Rückschlagventil (FCEPS CKV) geführt wird. Im Gegensatz zu Figur 6 wird die Luft nicht in die MIX, sondern in eine Luftverteilungsleitung bzw. -schiene eingeführt. Diese Leitung kann die Bezeichnung "Distribution Manifold" oder "Supply Duct" aufweisen. Im Normalbetrieb wird den Luftverteilungsleitungen Luft aus der MIX zugeführt. Wie aus Figur 8 ersichtlich, kann in wenigstens einer dieser Leitungen ein zusätzliches Ventil (FCEPS MIX CKV) (mechanisches Rückschlagventil oder elektrisches Ein-/Aus-Ventil) angeordnet sein, das eine Rückströmung der Luft in die MIX für den Notfall, d. h. für den Betrieb des FCEPS, verhindert. Hierdurch kann auch eine Abwärmeinleitung der Abwärme des HX in kritische Zonen, wie Cockpit oder Avionik verhindert werden, die üblicherweise von der MIX versorgt werden. Ein zusätzliches Isolationsventil ist in diesem Fall nicht erforderlich. Das FECPS-Gebläse kann vor und/oder nach dem HX angeordnet sein. Figur 9 zeigt eine Anordnung mit dezentraler Wärmeeinleitung, die HX-abluftseitig der der Figur 8 entspricht. Ein Unterschied besteht darin, dass die Zuluft des HX nicht aus der Umgebung, sondern aus einem beliebigen Teil des Luftverteilungssystems des Flugzeuges zugeführt wird. Die HX-Zuluftleitung zweigt stromaufwärts des RF und des RFAN von der in die MIX führenden Leitung bzw. Rezirkulationsleitung ab (Option 1), zwischen RF und RFAN (Option 2) oder direkt von der Mischkammer (Option 3). In diesem Fall sowie auch in den zuvor beschriebenen Fällen kann das stromabwärts des HX befindliche FCEPS CKV entweder als mechanisches oder elektrisches AUF/ZU-Ventil ausgeführt sein. Die Luftführung wird mittels eines oder mehrerer BPVs realisiert, wie dies in Figur 9 dargestellt ist. Ist das BPV stromabwärts des RFAN angeordnet bzw. zweigt die Zuluftleitung des HX stromabwärts des RFAN ab, kann auf eigenes Gebläse FCEPS FAN des HX bzw. des FCEPS verzichtet werden, da in diesem Fall der RFAN zur Kühlluftversorgung genutzt wird.

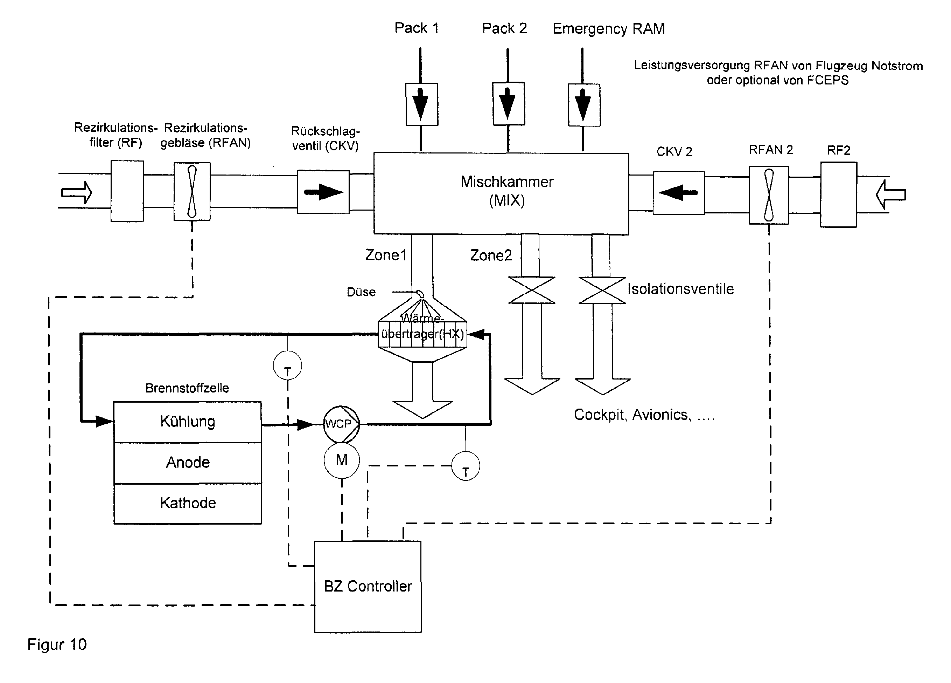

Figur 10 zeigt eine Anordnung mit dezentraler Wärmeeinleitung, bei der der HX direkt in einen der verfügbaren Zonenausgängen der MIX angeordnet ist. Die Kühlluft kann durch ein oder mehrere RFAN, RFAN2 geliefert werden. Die Isolationsventile sind notwendig, um die Lufteinblasung in weitere Zonen, die von der MIX versorgt werden, zu blockieren. Zusätzliche Rückschlagventile sind nicht erforderlich. Bei Integration des HX in die Zone mit dem geringsten Druckverlust kann der Wärmeübertrager die sonst notwendige Drosselung (für die gleichmäßige Luftverteilung) ersetzten bzw. ergänzen. Grundsätzlich kann auch bei der Architektur gemäß 10 ein oder mehrere eigene Gebläse (FCEPS FAN) vor und/oder nach dem HX vorgesehen sein, womit ein von den RFANs unabhängiger Betrieb möglich wäre. In diesem Fall wird mittels des eigenen Gebläses des HX Kühlluft über die Mischkammer MIX aus den Rezirkulationsleitungen angesaugt. Ohne den Einsatz von Isolationsventilen wird dann auch Luft aus den weiteren Zonen und dem Cockpit angesaugt. Der umgekehrte Betrieb, d. h. das Saugen aus Zone 1 und das Einblasen in weitere Zonen und das Cockpit ist ebenso denkbar.

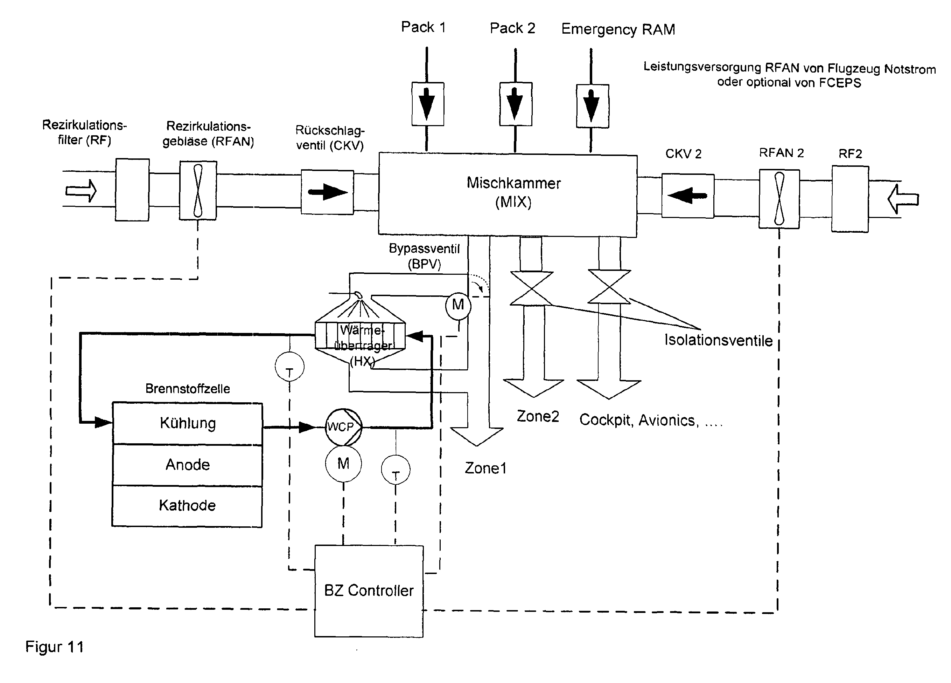

Figur 11 zeigt eine Architektur mit dezentraler Wärmeeinleitung, bei der der HX parallel zu einem Zonenausgang der MIX angeordnet ist. Im Zonenabgang ist ein BPV angeordnet, das den Luftstrom im Normalbetrieb durch den Zonenausgang in die Zone 1 führt. Im Notbetrieb wird die Luft über die Bypassleitung durch den HX geleitet. Zuluftleitung und Abluftleitung des HX münden in den Zonenabgang. Alternativ kann das BPV auch direkt in die Mischkammer integriert werden, wobei in diesem Fall in allen Zonenabgängen ein Isolationsventil vorteilhaft wäre. Auch ist es denkbar, vor und/oder nach dem HX ein eigenes Gebläse für den HX zu integrieren, womit ein von den RFANs unabhängiger Betrieb möglich wäre. Dabei wird die Kühlluft über die MIX aus den Leitungen bzw. Rezirkulationsleitungen angesaugt. Sind keine Isolationsventile vorgesehen, wird die Luft aus den weiteren Zonen und dem Cockpit angesaugt. Auch der umgekehrte Betrieb (Saugen aus Zone 1 und ein Blasen in die weiteren Zonen und das Cockpit) ist ebenso denkbar.

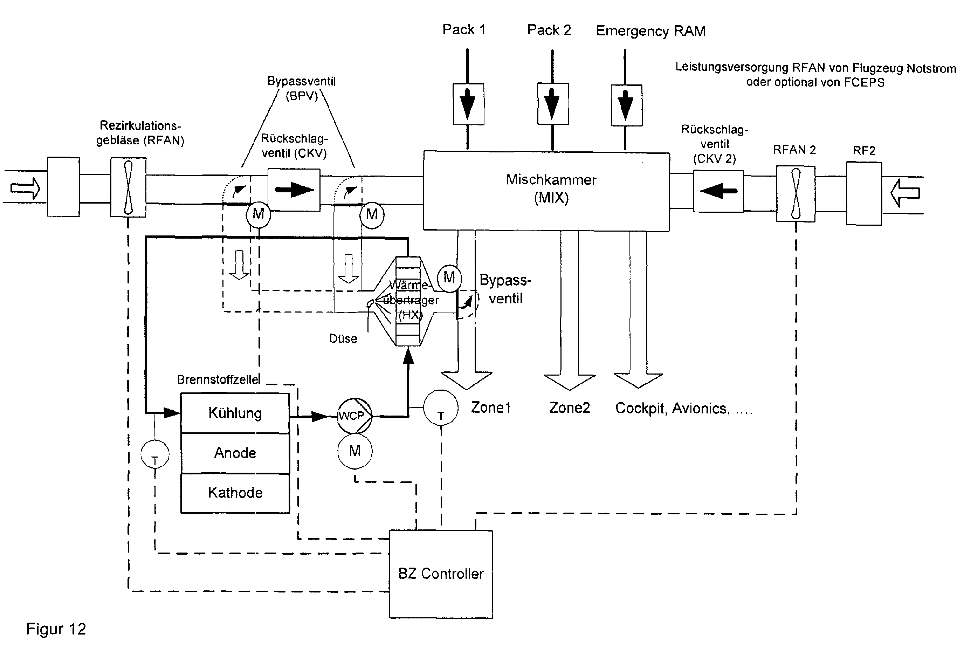

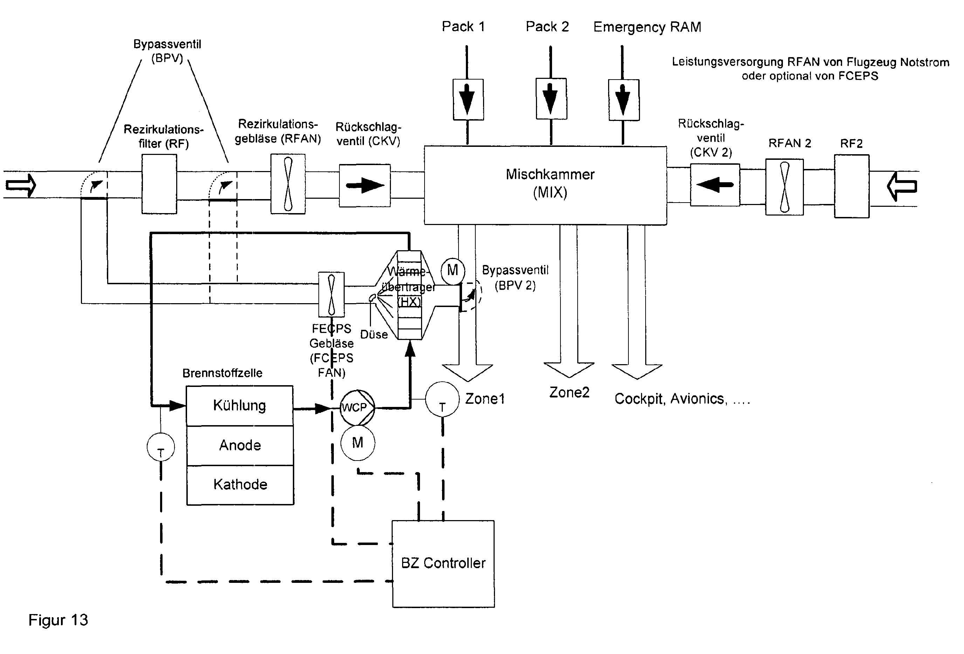

Figur 12 zeigt eine Architektur mit dezentraler Wärmeeinleitung, bei der der HX parallel zur Mischkammer angeordnet ist. Es ist eine Zuluftleitung für den HX vorgesehen, die an beliebiger Stelle zwischen RFAN und MIX von der in die MIX führenden Leitung bzw. Rezirkulationsleitung abzweigt. Luft wird somit mittels des RFAN in die abzweigende Leitung und damit in den HX geführt. Aus Redundanzgründen können eine oder mehrere optionale CDs zwischen weiteren RFANs und der MIX eingebaut werden. Die HX-Abluft wird in einen Zonenabgang geleitet. Es sind ein oder mehrere BPVs vorgesehen, die die Zuluftleitung und/oder die Abluftleitung des HX absperren oder freigeben. Isolationsventile sind notwendig, um die Lufteinblasung in weitere Zonen, die auch von der MIX mit Luft versorgt werden, zu blockieren. Alternativ zu Isolationsventilen kann es auch möglich sein, ein BPV zwischen MIX und Zuströmung vom HX zu platzieren. Figur 13 zeigt schließlich eine Anordnung, bei der der HX parallel zur MIX zwischen einem beliebigen luftführenden Rohr/Kanal vor dem RFAN und einem Zonenausgang der MIX angeordnet ist. Die Luftströmung über den HX wird durch ein eigenes Gebläse des HX (FECPS FAN) gewährleistet. Optional könnte eine oder mehrere Verbindungsleitungen zu einem oder mehreren RFANs führen. Damit könnte beim Ausfall eines Rezirkulationsgebläses wie auch bei den oben dargestellten Ausführungsformen auf ein weiteres RFAN umgeschaltet werden oder auf beide oder mehrere RFANs zur Kühlung herangezogen werden. Um die Lufteinblasung vom HX-Ausgang in die MIX zu vermeiden, ist nur ein Bypass-Ventil zwischen MIX und HX-Ausgang notwendig. Denkbar ist es auch, Isolationsventile in alle anderen Zonen oder sonstige Abgänge einzubauen, wodurch eine Strömung erwärmter Luft in die entsprechenden Zonen bzw. Cockpit, Avionik etc verhindert wird. Das FECPS-FAN kann vor und oder nach dem HX vorgesehen werden.

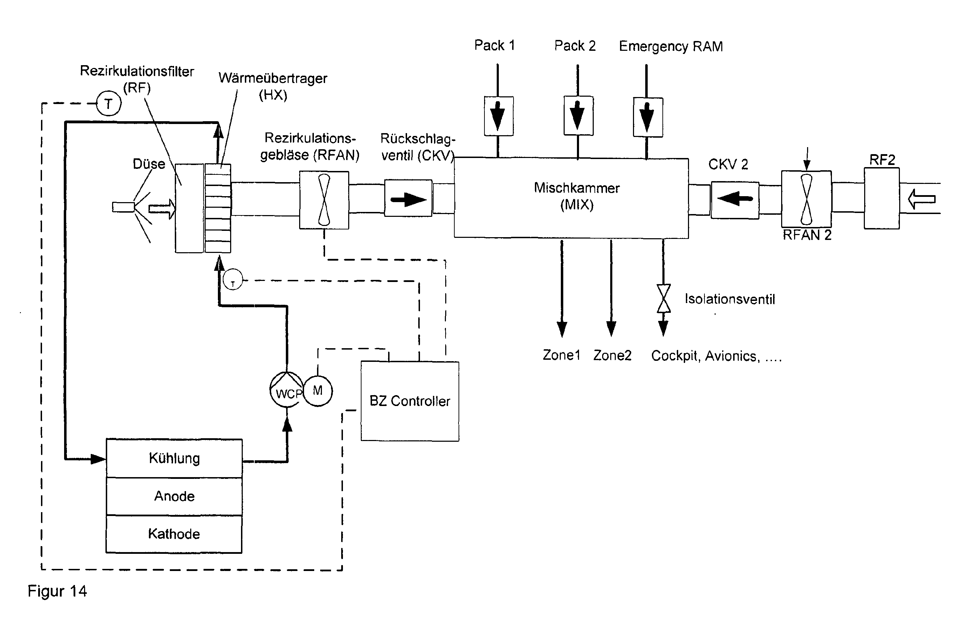

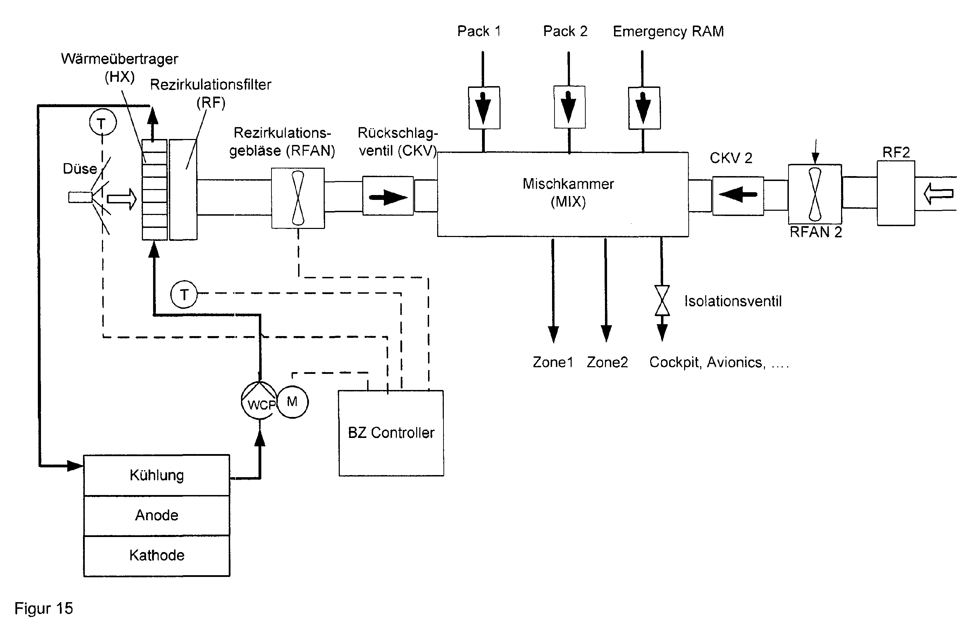

Figur 14 zeigt eine Anordnung, bei der der Wärmeübertrager HX der Brennstoffzelle bzw. des Brennstoffzellensystems FECPS direkt, das heißt ohne Verwendung einer Abzweigungsleitung im Ansaugstrang des Rezirkulationsgebläses RFAN angeordnet ist. Wird ein Rezirkulationsfilter RF verwendet, kann der Wärmeübertrager HX stromabwärts (Figur 14) oder stromaufwärts (Figur 15) des Rezirkulationsfilters RF angeordnet sein.

In beiden Fällen entstehen durch diese Anordnung des HX im Normalbetrieb zwar höhere Druckverluste, was eine höhere Gebläseleistung des RFAN erfordert, jedoch werden keine weiteren Komponenten für die Integration benötigt wie beispielsweise das Bypassventil BPV oder eine von der Rezirkulationsleitung abzweigende oder in diese mündende Leitung, in der der HX bzw. die Brennstoffzelle angeordnet ist.

Die Wassereinspritzung zur Kühlung des HX erfolgt entweder direkt auf den Rezirkulationsfilter RF oder auf den HX.

Diese Anordnung des Wärmeübertragers kann selbstverständlich auch in dem zweiten Luftstrang, der in den Figuren jeweils rechts dargestellt ist, angeordnet sein. Dies gilt nicht nur für die Ausführungen gemäß der Figuren 14 und 15, sondern für alle Ausführungsbeispiele und -formen der vorliegenden Erfindung.

Figur 16 zeigt schließlich eine Anordnung, bei der eine luftgekühlte Brennstoffzelle verwendet wird. Wie dies aus Figur 16 hervorgeht, ist in dem Ansaugstrang des Rezirkulationsgebläses RFAN die Brennstoffzelle angeordnet. Sie ersetzt somit den Wärmeübertrager HX. Die Brennstoffzelle gibt ihre Abwärme direkt in das Luftverteilungssystem ab. Dadurch ergibt sich eine Vereinfachung des Brennstoffzellensystems FECPS, da das notwendige Kühlsystem für eine wassergekühlte Brennstoffzelle gemäß der obigen Ausführungsbeispiele entfallen kann. Grundsätzlich ist es jedoch denkbar, die Brennstoffzelle zusätzlich durch ein Kühlsystem insbesondere gemäß einem der oben genannten Ausführungsformen zu kühlen.

Figur 16 zeigt nur eine mögliche Architektur bei der Verwendung einer luftgekühlten Brennstoffzelle. Alle weiteren Architekturen in den weiteren Abbildungen und Ausführungsformen können ebenfalls mit einer oder mehreren luftgekühlten Brennstoffzellen alternativ oder zusätzlich zur Verwendung eines Wärmeübertragers HX ausgestattet werden.

Die Menge des Kühlluftstroms durch die Brennstoffzelle zur Einstellung der Betriebstemperatur kann durch eine Regelung des RFAN, vorzugsweise gesteuert durch den Brennstoffzellen-Systemcontroller (BZ-Controller) erfolgen.

Auch für die Anordnung gemäß Figur 16 gilt, dass auch eine weitere Brennstoffzelle im zweiten, rechts dargestellten Luftstrang (RFAN2, RF2, etc.) installiert werden kann, um die Systemredundanz zu erhöhen.

In dem Ausführungsbeispiel gemäß Figur 16 ist die Brennstoffzelle in dem Ansaugstrang des Rezirkulationsgebläses RFAN angeordnet und zwar stromabwärts eines Rezirkulationsfilters RF. Grundsätzlich ist auch die Verwendung stromaufwärts des Rezirkulationsfilters denkbar.

Bevorzugte Ausführungsformen der vorliegenden Erfindung, die isoliert oder auch in Kombination Verwendung finden können, sind im folgenden nochmals wiedergegeben:
- interne Wärmeabfuhr des HX mit Hilfe eines oder mehrerer bestehender RFANs oder eigener Gebläse des HX bzw. des Notenergiesystems
- Differenzierung in zentrale und dezentrale Wärmeeinleitungen bzw. Wärmeabfuhr im Druck- oder Saugbetrieb,
- ein oder mehrere BPVs, um Druckverluste im RF zu umgehen,
- ein oder mehrere Isolationsventile, um die gewünschte Wärmeeinleitung von der MIX in bestimmte Zonen, wie Cockpit, Avionik etc zu vermeiden,
- CD(s), um Ansaugung über mehrere RFAN zu ermöglichen,
- zentrale Wärmeeinleitung im Druckbetrieb mit einem oder mehreren Rezirkulations- oder eigenen Gebläsen oder dezentrale Wärmeeinleitung im Druckbetrieb mit eigenem Gebläse,
- globale Umkehrung der Luftströmung, Arbeitsweise im Saugbetrieb,
- Kühlung der Brennstoffzelle nur über RFAN oder eigenen FAN ohne Thermostatventil im Brennstoffzellensystem,
- Anordnung von HX im Zonenabgang,
- Anordnung der Kühlluft aus beliebigem luftführenden Rohr/Kanal,
- Anordnung HX nach dem RFAN,
- Einblasen der HX-Abluft direkt in einen Zonenabgang,
- Anordnung des HX parallel zur MIX und/oder weiteren Komponenten.

## Patentansprüche

1. Verfahren zum Betreiben eines Notenergiesystems eines Flugzeuges bei Gewährleistung einer ordnungsgemäßen Funktion des Notenergiesystems, wobei das Notenergiesystem wenigstens eine Brennstoffzelleneinheit (FCEPS) zur Erzeugung elektrischer Energie aufweist, die mit wenigstens einem Luftverteilungssystem der Flugzeug-Kabine verbunden ist, wobei im Notfall elektrische Energie durch die Brennstoffzelleneinheit (FCEPS) zur Verfügung gestellt wird, **dadurch gekennzeichnet, dass** dabei beim Betrieb des Notenergiesystems vom Brennstoffzellensystem (FCEPS) erwärmte Abluft über das Luftverteilungssystem in der Flugzeug-Kabine zur internen Kühlung des Brennstoffzellensystems verteilt wird.

2. Verfahren nach Anspruch 1, **dadurch gekennzeichnet, dass** die Brennstoffzelleneinheit (FCEPS) zusätzlich über wenigstens einen Kühlkreislauf, der wenigstens einen Wärmeübertrager (HX) umfasst, gekühlt wird und der Wärmeübertrager (HX) mit dem Luftverteilungssystem der Flugzeug-Kabine verbunden ist, so dass beim Betrieb des Notenergiesystems vom Wärmeübertrager (HX) erwärmte Abluft über das Luftverteilungssystem in der Flugzeug-Kabine verteilt wird.

3. Verfahren nach einem der vorhergehenden Ansprüche, **dadurch gekennzeichnet, dass** das Brennstoffzellensystem (FCEPS) mit einer Mischkammer (MIX) des Luftverteilungssystems oder ohne Verwendung einer Mischkammer (MIX) des Luftverteilungssystems mit wenigstens einer Luftverteilungsleitung in Verbindung steht, in die Abluft des Brennstoffzellensystems (FCEPS) eingeleitet wird (Druckbetrieb) oder aus der Zuluft des Brennstoffzellensystems (FCEPS) abgezogen wird (Saugbetrieb).

4. Verfahren nach einem der vorhergehenden Ansprüche, **dadurch gekennzeichnet, dass** dem Brennstoffzellensystem (FCEPS) Zuluft aus der Umgebung der Brennstoffzelleneinheit (FCEPS) oder aus wenigstens einem Rohr oder Kanal oder wenigstens einen sonstigen Zuluftleitung zugeführt wird.

5. Verfahren nach einem der vorhergehenden Ansprüche, **dadurch gekennzeichnet, dass** eine Regeleinrichtung zur Regelung der Temperatur der Brennstoffzelleneinheit (FCEPS) vorgesehen ist, wobei die Regeleinrichtung derart ausgeführt ist, dass sie zum Zwecke der Temperaturregelung die Leistung wenigstens eines Gebläses (RFAN, RFAN 2, FCEPS FAN) regelt oder eine Ein/Aus-Steuerung wenigstens eines Gebläses (RFAN, RFAN 2, FCEPS FAN) vornimmt, wobei es sich bei dem Gebläse (RFAN, RFAN 2, FCEPS FAN) um ein Rezirkulationsgebläse (RFAN; RFAN 2) des Luftverteilungssystems oder um ein eigenes, dem Notenergiesystem zugeordnetes Gebläse (FCEPS FAN) handelt.

6. Verfahren nach einem der vorhergehenden Ansprüche, **dadurch gekennzeichnet, dass** ein oder mehrere Isolationsventile vorgesehen sind, mittels derer eine oder mehrere Zonen (Zone 1, Zone 2, Cockpit, Avionics) der Flugzeug-Kabine abgesperrt werden können, so dass sie im Notbetrieb, d.h. im Betrieb des Notenergiesystems nicht mit der vom Brennstoffzellensystem (FCEPS) erwärmten Abluft beaufschlagt werden.

7. Verfahren nach einem der vorhergehenden Ansprüche, **dadurch gekennzeichnet, dass** das Luftverteilungssystem wenigstens ein Rezirkulationsgebläse (RFAN, RFAN 2) aufweist, dass wenigstens eine Leitung bzw. Rezirkulationsleitung vorgesehen ist, die in eine Mischkammer (MIX) des Luftverteilungssystems mündet und in der mittels des Rezirkulationsgebläses (RFAN, RFAN 2) eine Luftströmung erzeugt wird und dass in die Leitung wenigstens eine Abluftleitung des Brennstoffzellensystems (FCEPS) stromabwärts oder stromaufwärts des Rezirkulationsgebläses (RFAN, RFAN 2) mündet.

8. Verfahren nach Anspruch 7, **dadurch gekennzeichnet, dass** stromaufwärts des Rezirkulationsgebläses (RFAN, RFAN 2) wenigstens ein Rezirkulationsfilter (RF) in der Leitung vorgesehen ist, und dass die Abluftleitung des Brennstoffzellensystems (FCEPS) zwischen dem Rezirkulationsfilter (RF) und dem Rezirkulationsgebläse (RFAN, RFAN 2) in die Leitung mündet.

9. Verfahren nach einem der vorhergehenden Ansprüche, **dadurch gekennzeichnet, dass** das Luftverteilungssystem wenigstens ein Rezirkulationsgebläse (RFAN, RFAN 2) aufweist, dass wenigstens eine Leitung bzw. Rezirkulationsleitung vorgesehen ist, die in eine Mischkammer (MIX) des Luftverteilungssystems mündet und in der mittels des Rezirkulationsgebläses (RFAN, RFAN 2) eine Luftströmung erzeugt wird, und dass von der Leitung wenigstens eine Zuluftleitung des Brennstoffzellensystems (FCEPS) stromabwärts oder stromaufwärts des Rezirkulationsgebläses (RFAN, RFAN 2) abzweigt.

10. Verfahren nach Anspruch 9, **dadurch gekennzeichnet, dass** stromaufwärts des Rezirkulationsgebläses (RFAN, RFAN 2) wenigstens ein Rezirkulationsfilter (RF) in der Leitung vorgesehen ist, und dass die Zuluftleitung des Brennstoffzellensystems (FCEPS) zwischen dem Rezirkulationsfilter (RF) und dem Rezirkulationsgebläse (RFAN, RFAN 2), stromaufwärts von Rezirkulationsfilter (RF) und Rezirkulationsgebläse (RFAN, RFAN 2) oder stromabwärts von Rezirkulationsfilter (RF) und Rezirkulationsgebläse (RFAN, RFAN 2) von der Leitung abzweigt.

11. Verfahren nach einem der vorhergehenden Ansprüche, **dadurch gekennzeichnet, dass** im Falle mehrerer Rezirkulationsgebläse (RFAN, RFAN 2) die wenigstens eine Abluftleitung oder die wenigstens eine Zuluftleitung der mehreren Rezirkulationsgebläse (RFAN, RFAN 2) im Notbetrieb mit der wenigstens einen Abluftleitung oder mit der wenigstens einen Zuluftleitung des des Brennstoffzellensystems (FCEPS) mittels wenigstens einer Verbindungsleitung (CD) verbunden wird.

12. Verfahren nach einem der vorhergehenden Ansprüche, **dadurch gekennzeichnet, dass** wenigstens ein Bypassventil (BPV) vorgesehen ist, das in einer ersten Stellung eine Durchströmung einer Leitung des Luftverteilungssystems ohne Durchströmung des Brennstoffzellensystems (FCEPS) und in einer zweiten Stellung eine Durchströmung des Brennstoffzellensystems (FCEPS) ermöglicht.

13. Verfahren nach einem der vorhergehenden Ansprüche, **dadurch gekennzeichnet, dass** das Luftverteilungssystem wenigstens ein in dem Luftverteilungssystem angeordnetes Rezirkulationsgebläse (RFAN; RFAN 2) aufweist und dass das Brennstoffzellensystem (FCEPS) direkt in dem Ansaugstrang des Rezirkulationsgebläses (RFAN; RFAN 2) angeordnet ist.

14. Verfahren nach einem der vorhergehenden Ansprüche, **dadurch gekennzeichnet, dass** wenigstens ein dem Notenergiesystem zugeordnetes Gebläse (FCEPS FAN) vorgesehen ist, das stromaufwärts und/oder stromabwärts des Brennstoffzellensystems (FCEPS) angeordnet ist und dass wenigstens eine Abluftleitung des Brennstoffzellensystems (FCEPS) vorgesehen ist, die in eine Mischkammer (MIX) des Luftverteilungssystems mündet oder ohne Verwendung einer Mischkammer (MIX) des Luftverteilungssystems mit einer Luftverteilungsleitung des Luftverteilungssystems des Flugzeuges in Verbindung steht und dass dem Brennstoffzellensystem (FCEPS) Zuluft aus der Umgebung der Brennstoffzelleneinheit (FCEPS) oder aus wenigstens einem Rohr oder Kanal oder wenigstens einen sonstigen Zuluftleitung zugeführt wird.

15. Verfahren nach Anspruch 14, **dadurch gekennzeichnet, dass** die Zuluftleitung des Brennstoffzellensystems (FCEPS) mit einer Mischkammer (MIX) des Luftverteilungssystems in Verbindung steht oder von einer Leitung bzw. Rezirkulationsleitung abzweigt, mittels derer Luft mittels eines Rezirkulationsgebläses (RFAN, RFAN 2) des Luftverteilungssystems in eine Mischkammer (MIX) des Luftverteilungssystems geführt wird.

16. Verfahren nach einem der vorhergehenden Ansprüche, **dadurch gekennzeichnet, dass** eine Mischkammer (MIX) des Luftverteilungssystems wenigstens eine Abluftleitung (Zonenabgang) aufweist, mittels derer Luft aus der Mischkammer (MIX) des Luftverteilungssystems in wenigstens eine Zone (Zone 1, Zone 2, Cockpit, Avionics) der Flugzeug-Kabine geführt wird, wobei das Brennstoffzellensystem (FCEPS) von durch die Abluftleitung der Mischkammer (MIX) des Luftverteilungssystems strömender Luft durchströmt wird, wobei vorgesehen sein kann, dass die Luftdurchströmung des Brennstoffzellensystems (FCEPS) mittels wenigstens eines Rezirkulationsgebläses (RFAN, RFAN 2) des Luftverteilungssystems und/oder mittels wenigstens eines stromaufwärts und/oder stromabwärts des Brennstoffzellensystems (FCEPS) angeordneten, dem Notenergiesystem zugeordneten Gebläses (FCEPS FAN) erfolgt.

17. Verfahren nach einem der vorhergehenden Ansprüche, **dadurch gekennzeichnet, dass** eine Mischkammer (MIX) des Luftverteilungssystems wenigstens eine Abluftleitung (Zonenabgang) aufweist, mittels derer Luft aus der Mischkammer in wenigstens eine Zone (Zone 1, Zone 2, Cockpit, Avionics) der Flugzeug-Kabine geführt wird, dass von der Abluftleitung der Mischkammer (MIX) des Luftverteilungssystems wenigstens eine Leitung abzweigt, in der das Brennstoffzellensystem (FCEPS) derart angeordnet ist, dass es von durch die abzweigende Leitung strömender Luft durchströmt wird.

18. Verfahren nach einem der vorhergehenden Ansprüche, **dadurch gekennzeichnet, dass** wenigstens eine Leitung bzw. Rezirkulationsleitung vorgesehen ist, durch die Luft mittels wenigstens eines Rezirkulationsgebläses (RFAN, RFAN 2) in eine Mischkammer (MIX) des Luftverteilungssystems geführt wird, dass stromabwärts des Rezirkulationsgebläses (RFAN, RFAN 2) von der Leitung wenigstens eine Zuluftleitung abzweigt, mittels derer Luft dem Brennstoffzellensystem (FCEPS) zugeführt wird, und dass eine Mischkammer (MIX) des Luftverteilungssystems wenigstens eine Abluftleitung (Zonenabgang) aufweist, in die die Abluftleitung des Brennstoffzellensystems (FCEPS) mündet.

19. Verfahren nach einem der vorhergehenden Ansprüche, **dadurch gekennzeichnet, dass** wenigstens eine Leitung bzw. Rezirkulationsleitung vorgesehen ist, durch die Luft mittels wenigstens eines Rezirkulationsgebläses (RFAN, RFAN 2) in eine Mischkammer (MIX) des Luftverteilungssystems geführt wird, dass stromaufwärts des Rezirkulationsgebläses (RFAN, RFAN 2) von der Leitung wenigstens eine Zuluftleitung abzweigt, mittels derer Luft dem Brennstoffzellensystem (FCEPS) zugeführt wird, wobei stromabwärts und/oder stromabwärts des Brennstoffzellensystems (FCEPS) wenigstens ein Gebläse (FCEPS FAN) vorgesehen ist, mittels dessen eine Durchströmung des Brennstoffzellensystems (FCEPS) erzeugt wird, und dass eine Mischkammer (MIX) des Luftverteilungssystems wenigstens eine Abluftleitung (Zonenabgang) aufweist, in die wenigstens eine Abluftleitung des Brennstoffzellensystems (FCEPS) mündet.

## Claims

1. A method of operating an emergency power system for an aircraft while ensuring a proper function of the emergency power system, wherein the emergency power system has at least one fuel cell unit (FCEPS) for producing electric power which is connected to at least one air distribution system of the aircraft cabin, wherein electric power is provided in an emergency by the fuel cell unit (FCEPS), **characterized in that** exhaust air heated by the fuel cell system (FCEPS) in the operation of the emergency power system is distributed via the air distribution system in the aircraft cabin for the internal cooling of the fuel cell system.

2. A method in accordance with claim 1, **characterized in that** the fuel cell unit (FCEPS) is additionally cooled by at least one cooling circuit which includes at least one heat exchanger (HX); and **in that** the heat exchanger (HX) is connected to the air distribution system of the aircraft cabin so that exhaust air heated by the heat exchanger (HX) in the operation of the emergency power system is distributed via the air distribution system in the aircraft cabin.

3. A method of operating an emergency power system in accordance with one of the preceding claims, **characterized in that** the fuel cell system (FCEPS) is connected to a mixing chamber (MIX) of the air distribution system or, without use of a mixing chamber (MIX) of the air distribution system, to at least one air distribution line into which the exhaust air of the fuel cell system (FCEPS) is introduced (pressure operation) or from which inflow air of the fuel cell system (FCEPS) is removed (suction operation).

4. A method in accordance with one of the preceding claims, **characterized in that** the fuel cell system (FCEPS) is supplied with inflow air from the environment of the fuel cell unit (FCEPS) or from at least one pipe or passage or from at least one other air inflow line.

5. A method in accordance with one of the preceding claims, **characterized in that** a regulation unit is provided for regulating the temperature of the fuel cell unit (FCEPS), wherein the regulation unit is designed such that, for the purpose of temperature regulation, it regulates the power of least one fan (RFAN, RFAN 2, FCEPS FAN) or carries out an ON/OFF control of at least one fan (RFAN, RFAN 2, FCEPS FAN), with the fan (RFAN, RFAN 2, FCEPS FAN) being a recirculation fan (RFAN; RFAN 2) of the air distribution system or a separate fan (FCEPS FAN) associated with the emergency power system.

6. A method in accordance with one of the preceding claims, **characterized in that** one or more isolation valves are provided by means of which one or more zones (Zone 1, Zone 2, Zone 3, cockpit, avionics) of the aircraft cabin can be blocked so that it is not charged with the exhaust air heated by the fuel cell system (FCEPS) in emergency operation, i.e. in operation of the emergency power system.

7. A method in accordance with one of the preceding claims, **characterized in that** the air distribution system has at least one recirculation fan (RFAN, RFAN 2); **in that** at least one line or recirculation line is provided which opens into a mixing chamber (MIX) of the air distribution system and in which an air flow is produced by means of the recirculation fan (RFAN, RFAN 2); and **in that** at least one exhaust air line of the fuel cell system (FCEPS) opens into the line downstream or upstream of the recirculation fan (RFAN, RFAN 2).

8. A method in accordance with claim 7, **characterized in that** at least one recirculation filter (RF) is provided in the line upstream of the recirculation fan (RFAN, RFAN 2); and **in that** the exhaust air line of the fuel cell system (FCEPS) opens into the line between the recirculation filter (RF) and the recirculation fan (RFAN, RFAN 2).

9. A method in accordance with one of the preceding claims, **characterized in that** the air distribution system has at least one recirculation fan (RFAN, RFAN 2); **in that** at least one line or recirculation line is provided which opens into a mixing chamber (MIX) of the air distribution system and in which an air flow is produced by means of the recirculation fan (RFAN, RFAN 2); and **in that** at least one air inflow line of the fuel cell system (FCEPS) branches off from the line downstream or upstream of the recirculation fan (RFAN, RFAN 2).

10. A method in accordance with claim 9, **characterized in that** at least one recirculation filter (RF) is provided in the line upstream of the recirculation fan (RFAN, RFAN 2); and **in that** the air inflow line of the fuel cell system (FCEPS) branches off from the line between the recirculation filter (RF) and the recirculation fan (RFAN, RFAN 2), upstream of the recirculation filter (RF) and the recirculation fan (RFAN, RFAN 2) or downstream of the recirculation filter (RF) and of the recirculation fan (RFAN, RFAN 2).

11. A method in accordance with one of the preceding claims, **characterized in that**, in the case of a plurality of recirculation fans (RFAN, RFAN 2), the at least one exhaust air line or the at least one air inflow line of the plurality of recirculation fans (RFAN, RFAN 2) is connected in emergency operation to the at least one exhaust air line or to the at least one air inflow line of the fuel cell system (FCEPS) by means of at least one connection line (CD).

12. A method in accordance with one of the preceding claims, **characterized in that** at least one bypass valve (BPV) is provided which enables a throughflow of a line of the air distribution system without a throughflow of the fuel cell system (FCEPS) in a first position and enables a throughflow of the fuel cell system (FCEPS) in a second position.

13. A method in accordance with one of the preceding claims, **characterized in that** the air distribution system has at least one recirculation fan (RFAN; RFAN 2) arranged in the air distribution system; and **in that** the fuel cell system (FCEPS) is arranged directly in the suction train of the recirculation fan (RFAN; RFAN 2).

14. A method in accordance with one of the preceding claims, **characterized in that** at least one fan (FCEPS FAN) is provided which is associated with the emergency power system and which is arranged upstream and/or downstream of the fuel cell system (FCEPS); and **in that** at least one exhaust air line of the fuel cell system (FCEPS) is provided which opens into a mixing chamber (MIX) of the air distribution system or, without a use of a mixing chamber (MIX) of the air distribution system, is connected to an air distribution line of the air distribution system of the aircraft; and **in that** the fuel cell system (FCEPS) is supplied with inflow air from the environment of the fuel cell unit (FCEPS) or from at least one pipe or passage or at least one other air inflow line.

15. A method in accordance with claim 14, **characterized in that** the inflow line of the fuel cell system (FCEPS) is connected to a mixing chamber (MIX) of the air distribution system or branches off from a line or recirculation line by means of which air is conducted into a mixing chamber (MIX) of the air distribution system by means of a recirculation fan (RFAN, RFAN 2) of the air distribution system.

16. A method in accordance with one of the preceding claims, **characterized in that** a mixing chamber (MIX) of the air distribution system has at least one exhaust air line (zone outflow) by means of which air is conducted from the mixing chamber (MIX) of the air distribution system into at least one zone (Zone 1, Zone 2, cockpit, avionics) of the aircraft cabin, wherein the fuel cell system (FCEPS) is flowed through by air flowing through the exhaust air line of the mixing chamber (MIX) of the air distribution system, with provision being able to be made that the air throughflow of the fuel cell system (FCEPS) takes place by means of at least one recirculation fan (RFAN, RFAN 2) of the air distribution system and/or by means of at least one fan (FCEPS FAN) arranged upstream and/or downstream of the fuel cell system (FCEPS) and associated with the emergency power system.

17. A method in accordance with one of the preceding claims, **characterized in that** a mixing chamber (MIX) of the air distribution system has at least one exhaust air line (zone outflow) by means of which air is conducted from the mixing chamber into at least one zone (Zone 1, Zone 2, cockpit, avionics) of the aircraft cabin; **in that** at least one line branches off from the exhaust air line of the mixing chamber (MIX) of the air distribution system, in which line the fuel cell system (FCEPS) is arranged such that it is flowed through by air flowing through the branch line.

18. A method in accordance with one of the preceding claims, **characterized in that** at least one line or recirculation line is provided through which air is conducted by means of at least one recirculation fan (RFAN, RFAN 2) into a mixing chamber (MIX) of the air distribution system; **in that** at least one exhaust air line branches off from the line downstream of the recirculation fan (RFAN, RFAN 2), by means of which exhaust air line air is supplied to the fuel cell system (FCEPS); and **in that** a mixing chamber (MIX) of the air distribution system has at least one exhaust air line (zone outflow) into which the exhaust air line of the fuel cell system (FCEPS) opens.

19. A method in accordance with one of the preceding claims, **characterized in that** at least one line or recirculation line is provided by which air is conducted by means of at least one recirculation fan (RFAN, RFAN 2) into a mixing chamber (MIX) of the air distribution system; **in that** at least one exhaust air line branches off from the line upstream of the recirculation fan (RFAN, RFAN 2), by means of which exhaust air line air is supplied to the fuel cell system (FCEPS), with at least one fan (FCEPS FAN) being provided downstream and/or downstream of the fuel cell system (FCEPS) by means of which fan a throughflow of the fuel cell system (FCEPS) is produced; and **in that** a mixing chamber (MIX) of the air distribution system has at least one exhaust air line (zone outflow) into which at least one exhaust air line the fuel cell system (FCEPS) opens.

## Revendications

1. Procédé en vue de l'exploitation d'un système d'énergie de secours d'un avion avec garantie d'un fonctionnement réglementaire du système d'énergie de secours, le système d'énergie de secours présentant au moins une unité à cellule de combustible (FCEPS) en vue de la génération d'énergie électrique, qui est reliée avec au moins un système de distribution d'air de la cabine d'avion, de l'énergie électrique étant mise à disposition en cas d'urgence par l'unité à cellule de combustible (FCEPS), **caractérisé en ce que** lors du fonctionnement du système d'énergie de secours, de l'air vicié réchauffé par le système de cellule de combustible (FCEPS) est alors distribué via le système de distribution d'air dans la cabine d'avion en vue du refroidissement interne du système de cellule de combustible.

2. Procédé selon la revendication 1, **caractérisé en ce que** l'unité à cellule de combustible (FCEPS) est refroidie à titre supplémentaire via au moins un circuit de refroidissement, qui comprend au moins un caloporteur (HX), et **en ce que** le caloporteur (HX) est relié avec le système de distribution d'air de la cabine d'avion, de sorte que lors du fonctionnement du système d'énergie de secours, de l'air vicié réchauffé par le caloporteur (HX) est distribué via le système de distribution d'air dans la cabine d'avion.

3. Procédé selon une quelconque des revendications précédentes, **caractérisé en ce que** le système de cellule de combustible (FCEPS) se trouve en relation avec une chambre de mélange (MIX) du système de distribution d'air ou sans utilisation d'une chambre de mélange (MIX) du système de distribution d'air avec au moins une conduite de distribution d'air, dans laquelle de l'air vicié du système de cellule de combustible (FCEPS) est introduit (mode de pression) ou aspiré hors de l'air frais du système de cellule de combustible (FCEPS) (mode d'aspiration).

4. Procédé selon une quelconque des revendications précédentes, **caractérisé en ce que** de l'air frais issu de l'environnement de l'unité à cellule de combustible (FCEPS) est introduit dans le système de cellule de combustible (FCEPS) ou au moins en provenance d'un tuyau ou d'un canal ou au moins d'une conduite d'air frais diverse.

5. Procédé selon une quelconque des revendications précédentes, **caractérisée en ce qu'**un équipement de régulation est prévu en vue de la régulation de la température de l'unité de cellule de combustible (FCEPS), l'équipement de régulation étant réalisé de sorte qu'il régule la puissance d'au moins un ventilateur (RFAN, RFAN 2, FCEPS FAN) dans l'objet de la régulation de température ou effectue une commande Marche/arrêt d'au moins un ventilateur (RFAN, RFAN 2, FCEPS FAN), sachant que dans le cas du ventilateur (RFAN, RFAN 2, FCEPS FAN), il s'agit d'un ventilateur de recirculation (RFAN, RFAN 2) du système de distribution d'air ou d'un ventilateur individuel affecté au système d'énergie de secours (FCEPS FAN).

6. Procédé selon une quelconque des revendications précédentes, **caractérisé en ce qu'**une ou plusieurs vannes d'isolation sont prévues, au moyen desquelles une ou plusieurs zones (zone 2, zone 2, cockpit, Avionics) de la cabine d'avion peuvent être sectionnées, de sorte qu'elles ne sont pas alimentées avec l'air vicié réchauffé par le système de cellule de combustible (FCEPS) pendant le fonctionnement de secours, c'est-à-dire pendant le fonctionnement du système d'énergie de secours.

7. Procédé selon une quelconque des revendications précédentes, **caractérisé en ce que** le système de distribution d'air présente au moins un ventilateur de recirculation (RFAN, RFAN 2), **en ce que** au moins une conduite et/ou une conduite de recirculation est prévue, qui aboutit dans une chambre de mélange (MIX) du système de distribution d'air et dans laquelle une circulation d'air est générée au moyen du ventilateur de recirculation (RFAN, RFAN 2), et **en ce que** dans la conduite, au moins une conduite d'air vicié du système de cellule de combustible (FCEPS) aboutit en aval ou en amont du ventilateur de recirculation (RFAN, RFAN 2).

8. Procédé selon la revendication 7, **caractérisé en ce que**, en amont du ventilateur de recirculation (RFAN, RFAN 2), au moins un filtre de recirculation (RF) est prévu dans la conduite, et **en ce que** la conduite d'air vicié du système de cellule de combustible (FCEPS) aboutit dans la conduite entre le filtre de recirculation (RF) et le ventilateur de recirculation (RFAN, RFAN 2).

9. Procédé selon une quelconque des revendications précédentes, **caractérisé en ce que** le système de distribution d'air présente au moins un ventilateur de recirculation (RFAN, RFAN 2), **en ce que** au moins une conduite et/ou une conduite de recirculation est prévue, qui aboutit dans une chambre de mélange (MIX) du système de distribution d'air et dans laquelle au moyen du ventilateur de recirculation (RFAN, RFAN 2), une circulation d'air est générée, et **en ce qu'**au moins une conduite d'air frais du système de cellule de combustible (FCEPS) dérive de la conduite en aval ou en amont du ventilateur de recirculation (RFAN, RFAN 2).

10. Procédé selon la revendication précédente, **caractérisé en ce que**, en amont du ventilateur de recirculation (RFAN, RFAN 2), au moins un filtre de recirculation (RF) est prévu dans la conduite, et **en ce que** la conduite d'air frais du système de cellule de combustible (FCEPS) dérive de la conduite entre le filtre de recirculation (RF) et le ventilateur de recirculation (RFAN, RFAN 2), en amont du filtre de recirculation (RF) et du ventilateur de recirculation (RFAN, RFAN 2) ou en aval du filtre de recirculation (RF) et du ventilateur de recirculation (RFAN, RFAN 2).

11. Procédé selon une quelconque des revendications précédentes, **caractérisé en ce que**, dans le cas de plusieurs ventilateurs de recirculation (RFAN, RFAN 2), au moins l'une des conduites d'air vicié ou au moins l'une des conduites d'air frais des plusieurs ventilateurs de recirculation (RFAN, RFAN 2) sont reliées en fonctionnement de secours avec au moins l'une des conduites d'air vicié ou avec au moins l'une des conduites d'air frais du système de cellule de combustible (FCEPS) au moins au moyen d'une conduite de liaison (CD).

12. Procédé selon une quelconque des revendications précédentes, **caractérisé en ce qu'**au moins une vanne de dérivation (BPV) est prévue, qui permet dans une première position une circulation à travers une conduite du système de distribution d'air sans circulation à travers le système de cellule de combustible (FCEPS) et dans une deuxième position une circulation à travers le système de cellule de combustible (FCEPS).

13. Procédé selon une quelconque des revendications précédentes, **caractérisé en ce que** le système de distribution d'air présente au moins un ventilateur de recirculation (RFAN ; RFAN 2) disposé dans le système de distribution d'air et **en ce que** le système de cellule de combustible (FCEPS) est disposé directement dans le tronçon d'aspiration du ventilateur de recirculation (RFAN ; RFAN 2).

14. Procédé selon une quelconque des revendications précédentes, **caractérisé en ce qu'**au moins un ventilateur (FCEPS FAN) affecté au système d'énergie de secours est prévu, qui est disposé en amont et/ou en aval du système de cellule de combustible (FCEPS) et **en ce qu'**au moins une conduite d'air vicié du système de cellule de combustible (FCEPS) est prévue, qui aboutit dans une chambre de mélange (MIX) du système de distribution d'air ou se trouve en relation avec une conduite de distribution d'air du système de distribution d'air de l'avion sans utilisation d'une chambre de mélange (MIX), et **en ce que** dans le système de cellule de combustible (FCEPS), de l'air frais issu de l'environnement de l'unité à cellule de combustible (FCEPS) ou issu au moins d'un tuyau ou canal ou au moins d'une conduite d'air frais diverse est introduit.

15. Procédé selon la revendication 14, **caractérisé en ce que** la conduite d'air frais du système de cellule de combustible (FCEPS) se trouve en relation avec une chambre de mélange (MIX) du système de distribution d'air ou dérive d'une conduite et/ou d'une conduite de recirculation, au moyen de laquelle de l'air est guidé au moyen d'un ventilateur de recirculation (RFAN, RFAN 2) du système de distribution d'air dans une chambre de mélange (MIX) du système de distribution d'air.

16. Procédé selon une quelconque des revendications précédentes, **caractérisé en ce qu'**une chambre de mélange (MIX) du système de distribution d'air présente au moins une conduite d'air vicié (sortie de zone), au moyen de laquelle de l'air issu de la chambre de mélange (MIX) du système de distribution d'air est guidé dans au moins une zone (zone 1, zone 2, cockpit, Avionics) de la cabine d'avion, le système de cellule de combustible (FCEPS) étant traversé par de l'air circulant à travers la conduite d'air vicié de la chambre de mélange (MIX) du système de distribution d'air, sachant qu'il est possible de prévoir que la circulation d'air du système de cellule de combustible (FCEPS) s'effectue au moyen d'au moins un ventilateur de recirculation (RFAN, RFAN 2) du système de distribution d'air et/ou au moyen d'au moins un ventilateur (FCEPS FAN) disposé en amont et/ou en aval du système de cellule de combustion (FCEPS) et affecté au système d'énergie de secours.

17. Procédé selon une quelconque des revendications précédentes, **caractérisé en ce qu'**une chambre de mélange (MIX) du système de distribution d'air présente au moins une conduite d'air vicié (sortie de zone), au moyen de laquelle de l'air issu de la chambre de mélange est guidé dans au moins une zone (zone 1, zone 2, cockpit, Avionics) de la cabine d'avion, **en ce qu'**au moins une conduite dérive de la conduite d'air vicié de la chambre de mélange (MIX) du système de distribution d'air, dans laquelle le système de cellule de combustible (FCEPS) est disposé de sorte qu'il est traversé par l'air circulant à travers la conduite dérivante.

18. Procédé selon une quelconque des revendications précédentes, **caractérisé en ce qu'**au moins une conduite et/ou une conduite de recirculation est prévue, à travers laquelle l'air est guidé au moyen d'au moins un ventilateur de recirculation (RFAN, RFAN 2) dans une chambre de mélange (MIX) du système de distribution d'air, **en ce que**, en aval du ventilateur de recirculation (RFAN, RFAN 2) au moins une conduite d'air frais dérive de la conduite, au moyen de laquelle de l'air est introduit dans le système de cellule de combustible (FCEPS), et **en ce qu'**une chambre de mélange (MIX) du système de distribution d'air présente au moins une conduite d'air vicié (sortie de zone), dans laquelle la conduite d'air vicié du système de cellule de combustible (FCEPS) aboutit.

19. Procédé selon une quelconque des revendications précédentes, **caractérisé en ce qu'**au moins une conduite et/ou une conduite de recirculation est prévue, à travers laquelle l'air est guidé au moyen d'au moins un ventilateur de recirculation (RFAN, RFAN 2) dans une chambre de mélange (MIX) du système de distribution d'air, **en ce que**, en amont du ventilateur de recirculation (RFAN, RFAN 2) au moins une conduite d'air frais dérive de la conduite, au moyen de laquelle de l'air est introduit dans le système de cellule de combustible (FCEPS), au moins un ventilateur (FCEPS FAN) étant prévu en aval et/ou en aval du système de cellule de combustible (FCEPS), au moyen duquel une traversée du système de cellule de combustible (FCEPS) est générée, et **en ce qu'**une chambre de mélange (MIX) du système de distribution d'air présente au moins une conduite d'air vicié (sortie de zone), dans laquelle au moins une conduite d'air vicié du système de cellule de combustible (FCEPS) aboutit.
